# EUROPÄISCHE PATENTSCHRIFT

(11) **EP 0 956 758 B1**
(45) Veröffentlichungstag und Bekanntmachung des Hinweises auf die Patenterteilung: **06.08.2003**
(21) Anmeldenummer: 99106523.6
(22) Anmeldetag: 30.03.1999
(51) Int. Cl.: A01D 34/52

(54) **Messer für Schlegelmäher**
Knife for flail mower
Couteau pour faucheuse à fléaux

(30) Priorität: 11.04.1998 DE 29806664 U
(43) Veröffentlichungstag der Anmeldung: 17.11.1999
(73) Patentinhaber: ESM ENNEPETALER SCHNEID- UND MÄHTECHNIK GMBH & CO. KG, D-58256 Ennepetal (DE)
(72) Erfinder: Manfred Schlasse, D-58089 Hagen (DE)
(74) Vertreter: Patentanwälte Rehberg + Hüppe

(56) Entgegenhaltungen:
- EP-A- 0 223 392
- BE-A- 862 840
- FR-A- 2 740 939
- GB-A- 2 031 704
- GB-A- 2 169 184
- US-A- 2 711 067
- US-A- 2 924 058
- US-A- 3 093 951
- US-A- 3 422 611
- US-A- 4 211 060

## Beschreibung

Die Erfindung bezieht sich auf ein Messer für Schlegelmäher nach dem Oberbegriff des Anspruchs 1 sowie auf ein Messer paar aus zwei solchen Messern und einen Schlegelmäher mit solchen Messern.

Bei bekannten Schlegelmähern ist an jedem Messerhalter ein sogenanntes Y-Messer gelagert, bei dem es sich tatsächlich um ein Y-artig angeordnetes Paar von Messern handelt. Die einzelnen Messer jedes Messerpaars verlaufen zunächst parallel zueinander und weisen dann voneinander weg abgewinkelte Schneidarme auf, an denen Schneiden ausgebildet sind. Die abgewinkelten Schneidarme und die Schneiden weisen eine Erstreckung, d.h. eine Erstrekkungskomponente parallel zu der Drehachse auf, um die die Messerhalter umlaufen. Die Messerhalter sind ebenfalls paarweise angeordnet, wobei sie einander bezüglich der Drehachse gegenüberliegen, um auftretende Zentrifugalkräfte auszugleichen. Zur Erzielung der gewünschten Schnittbreite der Schlegelmäher sind mehrere Messerpaare achsial nebeneinander angeordnet, wobei benachbarte Paare von Messerhaltern bezüglich der Drehachse um 90 ° zueinander versetzt sind. So ist eine Überschneidung der jeweiligen Erstreckung der Messer parallel zu der Drehachse möglich, ohne daß Kollisionen achsial benachbarter Messer zu befürchten sind. Die Messer sind schwenkbar an den Messerhaltern gelagert und erhalten ihre radial von der Drehachse weg gerichtete Arbeitsstellung durch die beim Umlaufen um die Drehachse auftretenden Zentrifugalkräfte. Durch ihre schwenkbare Lagerung können die Messer beim Auftreffen auf Hindernisse ausweichen. Dabei ist es üblich, daß auch die einzelnen Messer der Y-förmigen Messerpaare getrennt voneinander verschwenkbar sind und dementsprechend ausweichen können. Die mit relativ hoher Bewegungsgeschwindigkeit um die Drehachse umlaufenden Schneiden der Messer zerkleinern beim Vorschieben des Schlegelmähers in der Arbeitsrichtung das Mähgut. Beispielsweise wird ein senkrecht vom Boden nach oben stehender Halm mehrfach von den Schneiden der in seinem Bereich befindlichen Messer erfaßt und so in einzelne Abschnitte zerkleinert und letztlich über dem Boiden abgeschnitten. Der Vorschubwiderstand beim Vorwärtsschieben eines Schlegelmähers in seiner Arbeitsrichtung kann sehr groß werden, weil das Mähgut als geschlossene Wand vor dem Schlegelmäher steht. Dieser Effekt tritt insbesondere auf, wenn die Schneiden der Messer nicht mehr besonders scharf sind.

Ein Schlegelmäher, wie er hier beschrieben wurde und der Messer nach dem Oberbegriff des Patentanspruchs 1 aufweist, ist aus der US 2 711 067 A bekannt.

Die GB 2 169 184 A offenbart die Ausbildung von Schlagelementen für einen einem Mähwerk nachgeordneten Konditionierer. Schlagelemente sind paarweise V-förmig zusammengefaßt und einstückig ausgebildet. Jedes Paar von Schlagelementen ist zur Lagerung an einer Halterung vorgesehen, die um eine horizontal und quer zur der Arbeitsrichtung des Konditionierers verlaufende Drehachse angetrieben umlaufen. Dabei verläuft jedes der Schlagelemente nicht genau radial zu der Drehachse sondern unter einem leichten Winkel zu dieser Richtung, um die Arbeitsbreite jedes einstückigen Paars von Schlagelementen zu vergrößern. Dennoch sind die einzelnen Schlagelemente, die auf benachbarten Kreisbahnen um die Drehachse umlaufen, in Richtung der Drehachse untereinander beabstandet. Die Schlagelemente selbst sind im wesentlichen bandförmig und vorzugsweise aus Kunststoff ausgebildet. An Ihren freien Enden verjüngen sie sich stufenförmig, wobei die Stufen an der Vorderseite der Schlagelemente vorgesehen sind.

Der Erfindung liegt die Aufgabe zugrunde, ein Messer für Schlegelmäher nach dem Oberbegriff des Anspruchs 1 aufzuzeigen, die den Vorschubwiderstand der Schlegelmäher in ihrer Arbeitsrichtung verringern, indem sie das Mähgut besser erfassen. Weiterhin sollen ein Messerpaar aus zwei solchen Messern und ein Schlegelmäher mit solchen Messern aufgezeigt werden.

Erfindungsgemäß wird diese Aufgabe durch das Messer nach Anspruch 1 gelöst. Vorteilhafte Ausführungsformen des Messers sind in den abhängigen Ansprüchen 2 bis 5 dargelegt. Die abhängigen Ansprüche 6 bis 8 betreffen ein Messerpaar aus zwei solchen Messern und die abhängigen Ansprüchen 9 und 10 einen Schlegelmäher mit solchen Messern.

Beim Eindringen der um die Drehachse umlaufenden Messer in das Mähgut erweisen sich die gestuften Schneiden der Y-artig zusammengefaßten Paare von Messern als vorteilhaft. Durch die gestufte Ausbildung der Schneiden dringen diese stufenförmig in das Mähgut ein. Damit wird verhindert, daß das Mähgut als geschlossene Wand vor dem Schlegelmäher steht, in die ein Eindringen eines einzelnen Messerpaars relativ schwierig ist.

Durch die gestufte Ausbildung der Schneiden reduziert sich auch die Masse der abgewinkelten Schneidarme der Y-förmigen Messerpaare und die damit auftretenden seitlichen Kräfte als Resultierende der Zentrifugalkraft. Da die seitlichen Kräfte die Biegebeanspruchung der einzelnen Messer im Ansatzpunkt der abgewinkelten Schneidarme bestimmen, ist die Biegebeanspruchung bei den neuen Messern vergleichsweise gering. So kann der Winkel zwischen den abgewinkelten Schneidarmen der Y-förmigen Messerpaare größer als 100° ausgebildet werden, beispielsweise mit 120°.

Wenn der Lagerpunkt der Messer an den Messerhaltern in der Bewegungsrichtung um die Drehachse soweit hinten angeordnet ist, daß die Schneiden der Messer einen von der Drehachse weg gerichteten Anstellwinkel zu ihrer tangentialen Bewegungsrichtung um die Drehachse aufweisen, wird das Erfassen des Mähguts von den Schneiden der Messer weiter verbessert. Die Schneiden laufen etwas nach und haken daher hinter das Mähgut, wodurch dieses zuverlässig erfaßt wird. Bis zum Wenden der Messer zur Nutzung von Schneiden an den bisherigen Hinterkanten ihrer Schneidarme ist der Materialabtrag an den Messern typischerweise soweit fortgeschritten, daß anschließend kein unerwünschtes Vorlaufen der Schneiden auftritt. Ein solches Vorlaufen wird hingegen bei herkömmlichen Messern kurz vor ihrem Wenden wegen starker Abnutzung beobachtet.

Im folgenden werden die neuen Messer für Schlegelmäher anhand eines Ausführungsbeispiels näher erläutert und beschrieben. Dabei zeigt:

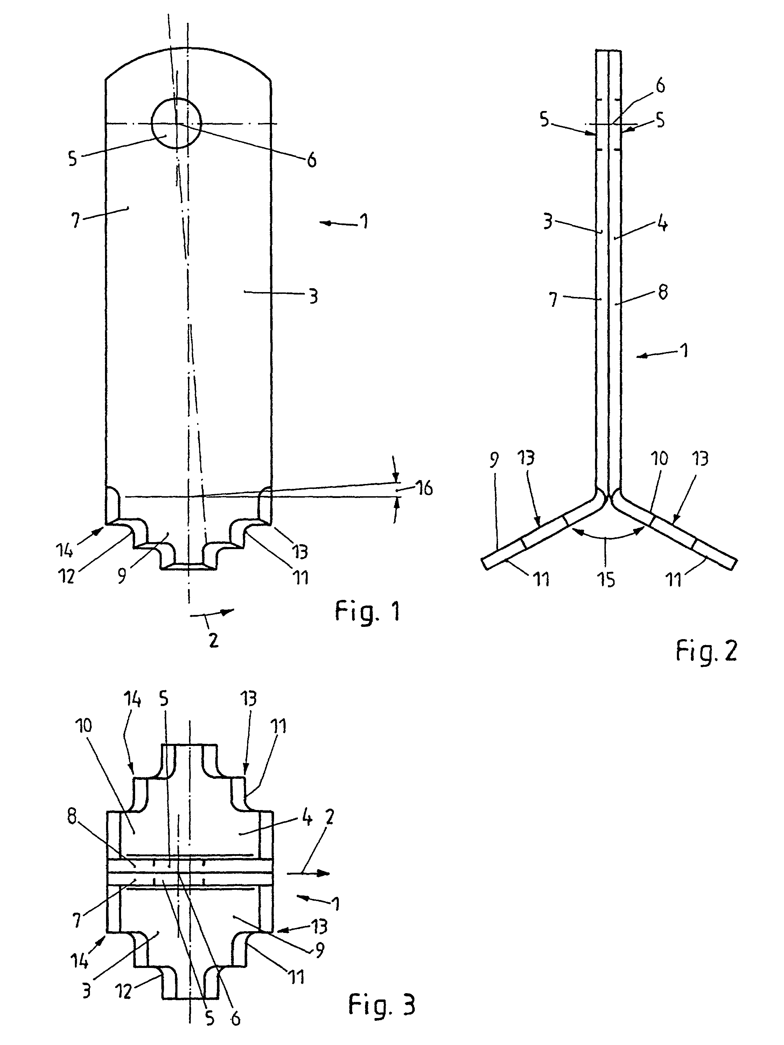

- Figur 1: ein Y-förmiges Messerpaar in einer in Bezug auf die Drehachse eines Schlegelmähers, um die das Messerpaar umläuft, achsialen Blickrichtung,
- Figur 2: das Y-förmige Messerpaar gemäß Figur 1 in einer in Bezug auf die Drehachse des Schlegelmähers tangentialen Blickrichtung und
- Figur 3: das Y-förmige Messerpaar gemäß den Figuren 1 und 2 in einer in Bezug auf die Drehachse des Schlegelmähers radialen Blickrichtung.

Die Figuren zeigen drei verschiedene Ansichten eines Y-förmigen Messerpaars 1 für einen hier nicht dargestellten Schlegelmäher. Das Messerpaar 1 besteht aus zwei einzelnen Y-förmig angeordneten Messern 3 und 4, die spiegelsymmetrisch zueinander ausgebildet sind. Das Messerpaar 1 ist zur Lagerung an einem in Richtung eines Pfeils 2 um eine Drehachse umlaufenden Messerhalter des Schlegelmähers vorgesehen und weist dazu in jedem Messer 3 und 4 eine Bohrung 5 für eine gemeinsame Befestigungsschraube auf. Die Lagerung der Messer 3 und 4 an dem Messerhalter erfolgt nicht starr, vielmehr sind beide Messer 3 und 4 um eine Achse 6 durch die Bohrungen 5 verschwenkbar. Durch die auftretenden Fliehkräfte richten sich die Messer 3 und 4 jedoch radial zu der Drehachse aus. Die einzelnen Messer 3 und 4 weisen die Bohrung 5 in parallel zueinander verlaufenden Lagerarmen 7 und 8 auf, an die sich voneinander weg abgewinkelte Schneidarme 9 und 10 anschließen. An den abgewinkelten Schneidarmen 9 und 10 sind abgestufte Schneiden 11 und 12 ausgebildet und zwar jeweils an der Vorderkante 13 und der Hinterkante 14 der abgewinkelten Schneidarme 9 und 10. Jede Schneide 11 und 12 weist drei rechtwinklige Stufen mit im wesentlichen in der Umlaufrichtung der Messer gemäß dem Pfeil 2 und quer zu der Umlaufrichtung verlaufenden Abschnitten auf. Bei schmaleren Schneidarmen könnten auch nur zwei, bei breiteren Schneidarmen auch mehr als drei Stufen vorgesehen sein, die überdies nicht rechtwinklig sein müssen. Die gestuften Schneiden 11 bzw. 12 erleichtern das schrittweise Eindringen des Messerpaas 1 in das mit dem Schlegelmäher zu mähende Mähgut, da dieses keine geschlossene Wand vor den rotierenden Schneiden 11 bzw. 12 ausbilden kann. Die Abstufung der Schneiden 11 und 12 verringert zudem das Gewicht der abgewinkelten Schneidarme 9 und 10 und damit die auftretenden seitlichen Kräfte sowie die Biegemomente um den Ansatzpunkt der abgewinkelten Schneidarme 9 und 30. Ein Winkel 15 zwischen den abgewinkelten Armen kann daher einen relativ großen Wert von hier beispielsweise 120° annehmen, ohne daß es zu einer übermäßigen Belastung der Messer und einer damit verbundenen Bruchgefahr kommt.

Um das Erfassen des Mähguts durch die Schneiden 11 und 12 noch weiter zu verbessern, sind die Bohrungen 5 zur schwenkbaren Lagerung des Messerpaars 1 an dem Messerhalter soweit entgegen der durch den Pfeil 2 angedeuteten Umlaufrichtung des Messerpaars 1 um die Drehachse des Messerhalters nach vorne verlagert, daß die vorderen, aktiven Schneiden 11 an ihren Vorderkanten 13 etwas nachlaufen und damit quasi in das Mähgut einhaken. Bis die Messer 3 und 4 soweit abgenutzt sind, daß sie zur Nutzung der bislang rückwärtigen Schneiden 12 an ihren Hinterkanten 14 gewendet werden müssen, hat sich die Masseverteilung durch Materialabtrag soweit geändert, daß nach dem Wenden kein unerwünschtes Vorlaufen der Schneiden 31 und 32 beobachtet wird. Ein Anstellwinkel 16 bei den neuen Messern 3 und 4 beträgt allerdings maximal nur einige wenige Grad. Sowohl der Anstellwinkel 16 als auch die außermittige Anordnung der Bohrungen 5 ist in den Figuren übertrieben, d. h. größer als in der Realität dargestellt.

### BEZUGSZEICHENLISTE

- 1 -: Messerpaar
- 2 -: Pfeil
- 3 -: Messer
- 4 -: Messer
- 5 -: Bohrung
- 6 -: Achse
- 7 -: Lagerarm
- 8 -: Lagerarm
- 9 -: Schneidarm
- 10 -: Schneidarm

- 11 -: Schneide
- 12 -: Schneide
- 13 -: Vorderkante
- 14 -: Hinterkante
- 15 -: Winkel
- 16 -: Anstellwinkel

## Patentansprüche

1. Messer (3, 4) mit einem Lagerarm (7, 8) zur Lagerung an einem Messerhalter, der um eine horizontal und quer zu der Arbeitsrichtung eines Schlegelmähers verlaufende Drehachse angetrieben umläuft, und mit einem gegenüber dem Lagerarm (7, 8) abgewinkelten und zumindest an einer seiner Kanten (13) mit einer Schneide (11, 12) versehenen Schneidarm, **dadurch gekennzeichnet, dass** die Schneide (11, 12) gestuft ausgebildet ist.

2. Messer (3, 4) nach Anspruch 1, **dadurch gekennzeichnet, dass** die Schneide (11, 12) rechtwinklige Stufen aufweist.

3. Messer (3, 4) nach Anspruch 1 oder 2, **dadurch gekennzeichnet, dass** die Schneide (11, 12) dreistufig ausgebildet ist.

4. Messer (3, 4) nach einem der Ansprüche 1 bis 3, **dadurch gekennzeichnet, daß** auch an der anderen Kante (14) des Schneidarms (9, 10) eine gestufte Schneide (12) ausgebildet ist.

5. Messer (3, 4) nach einem der Ansprüche 1 bis 4, **dadurch gekennzeichnet, dass** eine Bohrung in den Lagerarmen (7, 8) für die Lagerung des Messers (3, 4) an dem Messerhalter außermittig angeordnet ist.

6. Messerpaar (1) aus zwei Messern (3, 4) nach einem der Ansprüche 1 bis 5, **dadurch gekennzeichnet, dass** die beiden Messer (3, 4) jedes Messerpaars in Y-artiger Anordnung mit voneinander weg abgewinkelten Schneidarmen (9, 10) gemeinsam befestigbar sind, wobei die Schneiden (11, 12) bei beiden Messern (3, 4) auf derselben Seite vorgesehen sind.

7. Messerpaar (1) nach Anspruch 6, **dadurch gekennzeichnet, dass** die Schneiden (11, 12) der beiden Messer (3 und 4) in der Y-artigen Anordnung spiegelbildlich zueinander ausgebildet sind.

8. Messerpaar (1) nach Anspruch 6 oder 7, **dadurch gekennzeichnet, dass** ein Winkel (15) zwischen den abgewinkelten Schneidarmen (9 und 10) der beiden Messer (3 und 4) in der Y-artigen Anordnung größer als 100° ist.

9. Schlegelmäher mit Messerhaltern, die um eine horizontal und quer zu der Arbeitsrichtung eines Schlegelmähers verlaufende Drehachse angetrieben umlaufen, wobei an jedem Messerhalter ein Messerpaar (1) nach einem der Ansprüche 6 bis 8 gelagert ist.

10. Schlegelmäher nach Anspruch 9, **dadurch gekennzeichnet, dass** ein Lagerpunkt für die Lagerung jedes Messer (3, 4) an den Messerhaltern in der Bewegungsrichtung (Pfeil 2) um die Drehachse soweit hinten angeordnet ist, dass die Schneiden (11, 12) der Messer (3, 4) an den Vorderkanten (13) einen von der Drehachse weg gerichteten Anstellwinkel (16) zu ihrer tangentialen Bewegungsrichtung (Pfeil 2) um die Drehachse aufweisen.

## Claims

1. Knife (3, 4) having a mount arm (7, 8) for mounting to a knife holder which is driven and rotating about a horizontal rotating axis running across the working direction of a flail mower, and having a cutting arm which is inclined with regard to the mount arm (7, 8) and which is provided with a cutting edge (11, 12) at at least one of its edges, **characterized in, that** the cutting edge (11, 12) has steps.

2. Knife (3, 4) according to claim 1, **characterized in that** the cutting edge (11, 12) has rectangular steps.

3. Knife (3, 4) according to claim 1 or 2, **characterized in that** the cutting edge (11, 12) has three steps.

4. Knife (3, 4) according to any of the claims 1 to 3, **characterized in that** a cutting edge (11, 12) with steps is also provided at the other edge (14) of the cutting arm (9, 10).

5. Knife (3, 4) according to any of the claims 1 to 4, **characterized in that** a hole in the mount arms (7, 8) for mounting the knifes (3, 4) is eccentric.

6. Pair of knifes (1) consisting of two knifes (3, 4) according to any of the claims 1 to 5, **characterized in that** the two knifes (3, 4) of each pair of knifes are together attachable in an Y-shape arrangement with the cutting arms (9, 10) bent away form each other, the cutting edges (11, 12) of both knifes (3, 4) being provided at the same side.

7. Pair of knifes (1) according to claims 6, **characterized in that** the cutting edges (11, 12) of both knifes (3, 4) are mirror symmetric in the Y-shape arrangement.

8. Pair of knifes (1) according to claim 6 or 7, **characterized in that** an angle (15) between the cutting arms (9 and 10) of both knifes (3, 4) bent away form each other is greater than 100 ° in the Y-shape arrangement.

9. Flail mower with knife holders, which are driven and rotating about a horizontal rotating axis running across the operation direction of the flail mower, wherein a pair of knifes (1) according to any of the claims 6 to 8 is mounted to each knife holder.

10. Flail mower according to claim 9, **characterized in that** a mounting point for mounting each knife (3, 4) to the knife holders is positioned so far back in the moving direction (arrow 2) about the rotation axis that the cutting edges (11, 12) of the knifes (3, 4) at the front edges (13) show a stall angle (16) with regard to their tangential moving direction (arrow 2) about the rotation axis which stall angle (16) is directed away from the rotation axis..

## Revendications

1. Couteau (3, 4) avec un bras de support (7, 8) pour montage sur un porte-couteau qui tourne de manière entraînée autour d'un axe de rotation s'étendant horizontalement et transversalement à la direction de travail d'une moissonneuse batteuse, et avec un bras de coupe coudé par rapport au bras de support (7, 8) et pourvu d'une lame (11, 12) sur au moins un de ses bords (13), **caractérisé en ce que** la lame (11, 12) est réalisée étagée.

2. Couteau (3, 4) selon la revendication 1, **caractérisé en ce que** la lame (11, 12) présente des gradins perpendiculaires.

3. Couteau (3, 4) selon la revendication 1 ou 2, **caractérisé en ce que** la lame (11, 12) est réalisée avec trois gradins.

4. Couteau (3, 4) selon l'une des revendications 1 à 3, **caractérisé en ce que** sur l'autre bord (14) aussi du bras de coupe (9, 10) est réalisée une lame (12) étagée.

5. Couteau (3, 4) selon l'une des revendications 1 à 4, **caractérisé en ce qu'**un perçage est disposé excentré dans les bras de support (7, 8) pour supporter le couteau (3, 4) sur le porte-couteau.

6. Paire de couteaux (1) constituée de deux couteaux (3, 4) selon l'une des revendications 1 à 5, **caractérisé en ce que** les deux couteaux (3, 4) de chaque paire peuvent être fixés ensemble dans une disposition en Y avec des bras de coupe (9, 10) coudés en sens contraires, les lames (11, 12) étant prévues pour les deux couteaux (3, 4) sur le même côté.

7. Paire de couteaux (1) selon la revendication 6, **caractérisée en ce que** les lames (11, 12) des deux couteaux (3, 4) sont réalisées dans une symétrie en miroir l'une par rapport à l'autre dans la disposition en Y.

8. Paire de couteaux (1) selon la revendication 6 ou 7, **caractérisée en ce qu'**un angle (15) entre les bras de coupe (9 et 10) coudés des deux couteaux (3 et 4) dans la disposition en Y est supérieur à 100°.

9. Moissonneuse-batteuse avec des porte-couteaux qui tournent de manière entraînée autour d'un axe de rotation s'étendant horizontalement et transversalement à la direction de travail d'une moissonneuse-batteuse, sur chaque porte-couteaux étant montée une paire de couteaux (1) selon l'une des revendications 6 à 8.

10. Moissonneuse-batteuse selon la revendication 9, **caractérisée en ce qu'**un point de support pour le montage de chaque couteau (3, 4) sur les porte-couteaux est disposé dans la direction du mouvement (flèche 2) autour de l'axe de rotation, suffisamment derrière pour que les lames (11, 12) des couteaux (3, 4) présentent sur les bords avant (13) un angle d'inclinaison (16), dirigé en sens contraire à l'axe de rotation, par rapport à sa direction de mouvement tangentiel (flèche 2) autour de l'axe de rotation.
